# EUROPEAN PATENT SPECIFICATION

(11) **EP 4 468 104 B1**
(45) Date of publication and mention of the grant of the patent: **11.11.2026**
(21) Application number: 24203765.3
(22) Date of filing: 14.09.2020
(51) Int. Cl.: G05D 1/00, A01D 34/00

(54) **ROBOTIC WORK TOOL SYSTEM AND METHOD FOR TRANSPORTING A ROBOTIC WORK TOOL BETWEEN DIFFERENT AREAS**
ROBOTISCHES ARBEITSWERKZEUGSYSTEM UND VERFAHREN ZUM TRANSPORT EINES ROBOTISCHEN ARBEITSWERKZEUGS ZWISCHEN VERSCHIEDENEN BEREICHEN
SYSTÈME D'OUTIL DE TRAVAIL ROBOTIQUE ET PROCÉDÉ DE TRANSPORT D'UN OUTIL DE TRAVAIL ROBOTIQUE ENTRE DIFFÉRENTES ZONES

(30) Priority: 30.09.2019 SE 1951102
(43) Date of publication of application: 27.11.2024
(60) Divisional application: 25206633.7 / 4 649 810
(62) Document number(s) of the earlier application(s) in accordance with Art. 76 EPC: 20872522.6 / 4 037 464
(73) Proprietor: Husqvarna AB, 561 82 Huskvarna (SE)
(72) Inventor: GLIMBERG, Tommy, Nässjö (SE); GRUFMAN, Stefan, Bankeryd (SE); KALLSTRÖM, Fredrik, Huskvarna (SE); KAMFORS, Mattias, Jönköping (SE); LILJEDAHL, Marcus, Huskvarna (SE); MANNEFRED, Björn, Jönköping (SE); HESSSIN, Beppe, Jönköping (SE)

(56) References cited:
- WO-A1-2021/066702
- US-A1- 2013 030 609
- US-A1- 2013 184 924
- US-A1- 2018 116 105

## Description

### TECHNICAL FIELD

The present disclosure relates to a robotic work tool system as well as a method for an improved way of transporting a robotic work tool between different areas.

More specifically, the present disclosure presents a robotic lawnmower system configured to avoid trails from a robotic lawnmower in a transit zone, where the transit zone is an area connecting a work area with a charging station and in which the robotic lawnmower is allowed to travel from a start point to a goal point along a travel path.

### BACKGROUND

A robotic work tool is an autonomous robot apparatus that is used to perform certain tasks, for example for cutting lawn grass. A robotic work tool is generally controlled by defining an area, in which the robotic work tool is intended to operate. The work area is defined by a perimeter enclosing the work area. The perimeter includes borders, or boundaries, which the robotic work tool is not intended to cross. The robotic work tool is typically configured to work in a random pattern inside the work area.

When larger areas are to be mowed, these are generally divided into subareas, i.e. smaller defined areas with boundaries. An example of such a large area may be a sports area, which comprises several football fields. In such sports area, the robotic work tool typically has to transport between a charging station and the football fields, or subareas, and between the different football fields. Generally, there is a desired path which the robotic work tool should take in order to avoid obstacles, disturbances of other areas etc. The robotic work tool is typically guided along a travel path between these subareas and charging station. The travel path is thereafter repeatedly used by the robotic work tool for transport between the subareas and the charging station.

However, even if there are many advantages with a specified travel path for transporting the robotic work tool between different locations such that obstacles may be avoided and such that the robotic work tool may operate autonomously, without an operator, the inventors have realized that there may arise problems when such travel path is used by multiple robotic work tools and/or when it is used repeatedly. Thus, there is a need for an improved way of transporting a robotic work tool between different locations.

US 2013/184924 A1 was cited during the prosecution before the European Patent Office. This patent application later issued into a patent, i.e. US 9,405,294, which is assigned to Husqvama AB. This patent discloses a method and system for guiding a robotic garden tool. The robotic garden tool may include at least two sensing means. The robotic garden tool is equipped to follow along a guiding wire on a lawn. While the robotic garden tool moves along the guiding wire, the sensing means may detect a magnetic field strength generated from current carrying guiding wire. The method and the system is equipped to provide instructions to the robotic garden tool to follow the guiding wire based on the difference of magnetic field strength sensed by at least two sensing means.

### SUMMARY

The inventors of the various embodiments have realized, after inventive and insightful reasoning, that when a defined travel path between different locations is used repeatedly and/or by multiple robotic work tools, the travel path eventually gets permanent marks, or trails, from the wheels of the robotic work tools. This is usually undesirable as it may destroy the area where the travel path is located. It may be perceived as unattractive, but more importantly, it may make the travel path difficult to travel for the robotic work tools. Thus, there is a need for a solution which allows at least one robotic work tool to travel between different locations repeatedly but which still allows the at least one robotic work tool to travel autonomously, without a manual operator, and which still allows the at least one robotic work tool to avoid obstacles.

In view of the above, it is therefore a general object of the aspects and embodiments described throughout this disclosure to provide a solution for an improved way of transporting at least one robotic work tool between different locations.

This general object has been addressed by the appended independent claims. Advantageous embodiments are defined in the appended dependent claims.

According to a first aspect, there is provided a robotic lawnmower system configured to avoid trails from a robotic lawnmower in a transit zone, the transit zone being an area connecting a work area with a charging station and in which the robotic lawnmower is allowed to travel from a start point to a goal point along a travel path. The robotic lawnmower system comprises:
- at least one memory configured to store information about the transit zone;
- at least one robotic lawnmower configured to travel along the travel path within the transit zone;
- at least one controller for controlling operation of the at least one robotic lawnmower, the at least one controller being configured to:
   ∘ receive, from the at least one memory, information about the transit zone;
   ∘ determine the transit zone by determining virtual boundaries which define a corridor between the start point and the goal point, wherein said virtual boundaries are determined based on transit data associated with the start point and the goal point;
   ∘ generate, based on the determined transit zone, the travel path for the robotic lawnmower from the start point to the goal point, wherein the generated travel path is configured to differ from previously generated travel paths within the transit zone.

The robotic lawnmower system further comprises at least one input device configured to receive transit data associated with the start point and the goal point; and wherein the at least one controller is further configured to determine the transit zone based on the transit data received from the at least one input device, such that the determination of the virtual boundaries is performed using said transit data; and wherein the at least one input device comprises a recording device configured to record a transit path of the robotic lawnmower while the robotic lawnmower is moved from the start point to the goal point, and wherein the at least one controller is further configured to determine the virtual boundaries by expanding the recorded transit path sideways so as to define said corridor, wherein the transit zone is determined as the area between the recorded transit path and the sideway expanded transit path.

In some embodiments, the at least one input device comprises a user interface configured to receive user input from a user during the user's operation and interaction with said user interface.

In some embodiments, the transit path is expanded by a distance that is configurable by the at least one input device.

In some embodiments, the recording device is configured to record transit paths of the robotic lawnmower while the robotic lawnmower is moved from the start point to the goal point, and from the goal point back to the start point, and the at least one controller is configured to determine the transit zone to be the area between the two recorded transit paths.

In some embodiments, the at least one controller is configured to randomly generate the travel path.

In some embodiments, the at least one controller is configured to systematically generate the travel path.

In some embodiments, the previously generated travel paths are the travel paths that have been used by the robotic lawnmower for the last 7 days.

In some embodiments, the previously generated travel paths are the 10 previous generated travel paths.

In some embodiments, the distance by which the transit path is expanded is configurable by the at least one input device.

In some embodiments, the robotic lawnmower system further comprises obstacle detection sensors configured to detect and avoid obstacles within the transit zone.

In some embodiments, the travel path is generated using a specific algorithm selected from a group consisting of random generation and systematic generation.

In some embodiments, the robotic lawnmower and the controller communicate via a wireless communication interface.

In some embodiments, the goal point is a charging station.

In some embodiments, the recording device is configured to record transit paths of the robotic lawnmower while the robotic lawnmower is moved from the start point to the goal point, and from the goal point back to the start point, and the at least one controller is configured to determine the transit zone to be the area between the two recorded transit paths.

According to a second aspect, there is provided a method performed by a robotic lawnmower system for avoiding trails from a robotic lawnmower in a transit zone, the transit zone being an area connecting a work area with a charging station and in which the robotic lawnmower is allowed to travel from a start point to a goal point along a travel path, wherein the robotic lawnmower system comprises at least one memory configured to store information about the transit zone, at least one robotic lawnmower configured to travel along the travel path within the transit zone, and at least one controller for controlling operation of the robotic lawnmower, the method comprising:
- receiving, from the at least one memory, information about the transit zone;
- determining, by the at least one controller, the transit zone by determining virtual boundaries which define a corridor between the start point and the goal point, wherein said virtual boundaries are determined based on transit data associated with the start point and the goal point;
- generating, by the at least one controller based on the determined transit zone, the travel path for the robotic lawnmower from the start point to the goal point, wherein the generated travel path is configured to differ from previously generated travel paths within the transit zone;
- receiving, by at least one input device, transit data associated with the start point and the goal point;
- recording, by the at least one input device, a transit path of the robotic lawnmower while the robotic lawnmower is moved from the start point to the goal point;
- determining, by the at least one controller, the transit zone based on the transit data received from the at least one input device, such that the determination of the virtual boundaries is performed using said transit data; and further
- determining, by the at least one controller, the virtual boundaries by expanding the recorded transit path sideways so as to define said corridor, wherein the transit zone is determined as the area between the recorded transit path and the sideway expanded transit path.

According to a third aspect, there is provided a computer program comprising instructions which, when the program is executed by a controller of a robotic lawnmower system, cause the controller to carry out the method according to the second aspect.

The following aspects and embodiments described in this summary section are provided to facilitate an understanding of various implementations of the present disclosure. The invention is defined by the appended claims, and the scope of protection is determined accordingly.

According to a fourth aspect, there is provided a robotic work tool system for avoiding trails from at least one robotic work tool in a transit zone. The transit zone is an area in which the at least one robotic work tool is allowed to travel from a start point to a goal point along a travel path.

In one exemplary embodiment, the robotic work tool system comprises at least one memory configured to store information about the transit zone and at least one robotic work tool configured to travel along the travel path within the transit zone. The robotic work tool system further comprises at least one controller for controlling operation of the at least one robotic work tool. The at least one controller is configured to receive, from the at least one memory, information about the transit zone; and to generate, based on the determined transit zone, the travel path for the at least one robotic work tool from the start point to the goal point. The generated travel path is configured to differ from previously generated travel paths within the transit zone.

In one embodiment, the robotic work tool system further comprises at least one input device configured to receive transit data associated with the start point and the goal point. The at least one controller is further configured to determine the transit zone based on the transit data received from the at least one input device.

In one embodiment, the at least one input device comprises a user interface configured to receive user input from a user during the user's operation and interaction with said user interface.

In one embodiment, the at least one controller is further configured to determine the transit zone by determining virtual boundaries which define a corridor between the start point and the goal point

In one embodiment, the at least one input device comprises a recording device. The recording device is configured to record a transit path of the at least one robotic work tool while the at least one robotic work tool is moved from the start point to the goal point. The at least one controller may be configured to determine the virtual boundaries by expanding the recorded transit path sideway, wherein the transit zone is determined as the area between the recorded transit path and the sideway expanded transit path. Alternatively, the at least one controller may be configured to determine the virtual boundaries by expanding the recorded transit path sideway on both sides of the recorded transit path, wherein the transit zone is determined as the area between the sideways expanded transit paths.

In one embodiment, the transit path is expanded by a distance that is configurable by the at least one input device.

In one embodiment, the recording device is configured to record transit paths of the at least one robotic work tool while the at least one robotic work tool is moved from the start point to the goal point, and from the goal point back to the start point. The at least one controller is configured to determine the transit zone to be the area between the two recorded transit paths.

In one embodiment, the at least one controller is configured to randomly generate the travel path. In another embodiment, the at least one controller is configured to systematically generate the travel path.

In one embodiment, the previously generated travel paths are the travel paths that have been used by the at least one robotic work tool for the last 7 days. In another embodiment, the previously generated travel paths are the 10 previous generated travel paths.

In one embodiment, at least one of the at least one robotic work tool is a robotic lawn mower.

According to a fifth aspect, there is provided a method implemented by the robotic work tool system according to the fourth aspect.

In one exemplary implementation, the method is performed by a robotic work tool system for avoiding trails from at least one robotic work tool in a transit zone. The transit zone is an area wherein the at least one robotic work tool is allowed to travel from a start point to a goal point along a travel path. The robotic work tool system comprises at least one memory configured to store information about the transit zone and at least one robotic work tool configured to travel along the travel path within the transit zone. The robotic work tool system further comprises at least one controller for controlling operation of the at least one robotic work tool. The method comprises receiving, from the at least one memory, information about the transit zone, and generating, based on the determined transit zone, the travel path for the at least one robotic work tool from the start point to the goal point. The generated travel path is configured to differ from previously generated travel paths within the transit zone.

Some of the above embodiments eliminate or at least reduce the problems discussed above. By generating a transit zone wherein the at least one robotic work tool may be transported between a start point and a goal point along different travel paths, it may be assured that the same travel path is not used repeatedly. Thereby, it may be possible to avoid that trails are generated. Thus, a robotic work tool system and method are provided that improve the way of transporting a robotic work tool between different areas.

### BRIEF DESCRIPTION OF DRAWINGS

These and other aspects, features and advantages will be apparent and elucidated from the following description of various embodiments, reference being made to the accompanying drawings, in which:
Figure 1 shows a schematic overview of a robotic work tool;
Figure 2 shows a schematic view of a robotic work tool system;
Figure 3 illustrates an example embodiment;
Figure 4 illustrates an example embodiment implementing the robotic work tool system;
Figure 5 shows a flowchart of an example method performed by a robotic work tool system; and
Figure 6 shows a schematic view of a computer-readable medium.

### DETAILED DESCRIPTION

The disclosed embodiments will now be described more fully hereinafter with reference to the accompanying drawings, in which certain embodiments of the robotic work tool system are shown. This robotic work tool system may, however, be embodied in many different forms and should not be construed as limited to the embodiments set forth herein; rather, these embodiments are provided by way of example so that this disclosure will be thorough and complete, and will fully convey the scope of the robotic work tool system to those skilled in the art. Like numbers refer to like elements throughout.

In one of its aspects, the disclosure presented herein concerns a robotic work tool system for avoiding trails from at least one robotic work tool in a transit zone. A transit zone is an area in which the at least one robotic work tool is allowed to travel from a start point to a goal point along a travel path. The transit zone is a corridor within which the at least one robotic work tool may take different travel paths in order to reach the goal point when starting at the start point.

The robotic work tool system comprises at least one robotic work tool. The at least one robotic work tool may be realised in many different ways. While the present disclosure will mainly be described in general terms of an autonomous robot designed for mowing grass, it should be understood that the robotic work tool described herein may be implemented into any type of autonomous machine that may travel between different work areas. Examples of such types of autonomous machines include, without limitation, cleaning robotic work tools, polishing work tools, repair work tools, surface-processing work tools (for indoors and/or outdoors), garbage handling work tools, transportation work tools and/or demolition work tools or the like.

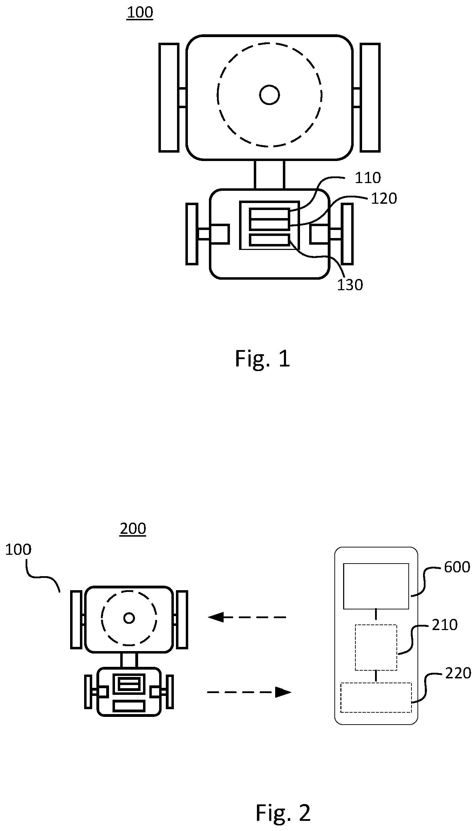

Figure 2 shows a schematic overview of a robotic working tool 100, which may be exemplified by a robotic lawnmower 100, having a front carriage 101' and a rear carriage 101". It is appreciated that the present disclosure is not limited to a robotic work tool 100 having separate front and rear carriages 101', 101". Rather, the robotic work tool 100 may also be of a type that comprises one single integral body.

The robotic working tool 100 comprises a plurality of wheels 150. In the exemplary embodiment of Figure 2, the robotic working tool 100 comprises two pair of wheels 150. One pair of front wheels 150 is arranged in the front carriage 101' and one pair of rear wheels 150 is arranged in the rear carriage 101". However, it may be appreciated that the numbers and locations of the plurality of wheels 150 of the robotic work tool 100 in the present disclosure is not limited to any number and/or location of the plurality of wheels 150. At least some of the wheels 150 are drivably connected to at least one electric motor 155. It is appreciated that combustion engines may alternatively be used, possibly in combination with an electric motor.

With reference to the Figure 2, a first embodiment according to the first aspect will now be described. Figure 2 shows a schematic view of a robotic work tool system 200 according to one embodiment. As will be appreciated, the schematic view is not to scale.

As illustrated in Figure 2, the robotic work tool system 200 comprises at least one robotic work tool 100, at least one controller 110, 210 and at least one memory 120, 220. The at least one robotic work tool 100 is configured to travel along a travel path 310.

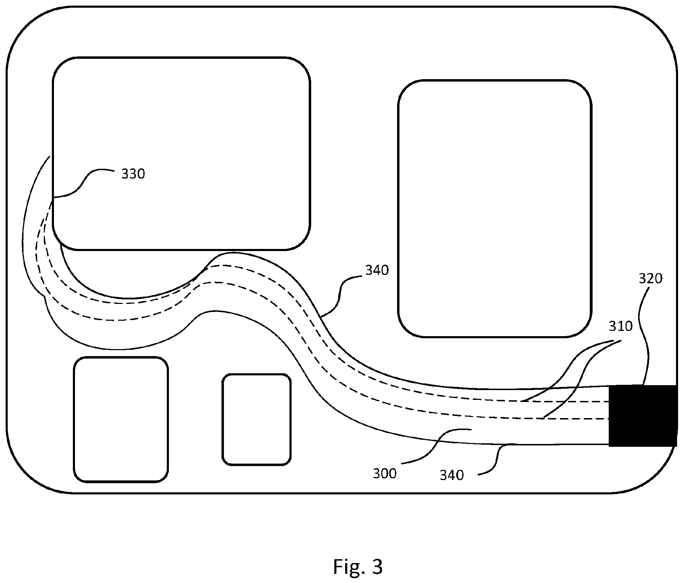

The at least one memory 120, 220 is configured to store information about the transit zone 300. The transit zone 300 may be exemplified in many different ways, but Figure 3 illustrates one example of such transit zone 300. The transit zone may be, for example, a zone, or an area, connecting a work area with a charging station located outside the work area, such that the start, or goal, point is located at the border of the work area and the goal, or start, point is located at the charging station. According to another example, the transit zone may be an area connecting a first work area with a second working area, such that the start point is at the border of the first work area and the goal point at the border of the second work area.

As understood from Figure 2, the at least one memory 120,220 may be the internal memory 120 of the at least one robotic work tool 100, and/or the at least one memory 120, 220 may be a memory 220 located remote from the at least one robotic work tool 100, e.g. remotely in a cloud-based solution. The at least one memory 120, 220 may be implemented using any commonly known technology for computer-readable memories such as ROM, RAM, SRAM, DRAM, FLASH, DDR, SDRAM or some other memory technology. In embodiments where the robotic work tool system 200 comprises a plurality of robotic work tools 100, it may be appreciated that the at least one memory 120, 220 may be shared between the plurality of robotic work tools 100. In these embodiments, the at least one memory may be a memory 220 located remote from the plurality of robotic work tools 100, e.g. remotely in a cloud-based solution or in a central server. Alternatively, the at least one memory may be the internal memories 120 of the plurality of robotic work tools 100 and shared between the robotic work tools 100.

The at least one controller 110, 210 is configured to control the operation of the at least one robotic work tool 100. The controller 110, 210 is configured to read instructions from the at least one memory 120, 220 and execute these instructions to control the operation of the at least one robotic work tool 100. In one embodiment, the at least one controller 210 is embodied as software, e.g. remotely in a cloud-based solution. In another embodiment, the at least one controller 110, 210 may be embodied as a hardware controller. The at least one controller 110, 210 may be implemented using any suitable, publicly available processor or Programmable Logic Circuit (PLC).

The at least one controller 110, 210 may, for example, be the controller 110 located in the at least one robotic work tool 100. According to another example, the at least one controller 210 may be located in a device that is separate from the robotic work tool 100. When the at least one controller 210 is located in another device than in the at least one robotic work tool 100, the separate device is communicatively coupled to the at least one robotic work tool 100. They may be communicatively coupled to each other by a wireless communication interface. Additionally, or alternatively, the wireless communication interface may be used to communicate with other devices, such as servers, personal computers or smartphones, charging stations, remote controls, other robotic work tools or any remote device, which comprises a wireless communication interface and a controller. Examples of such wireless communication are Bluetooth^{®}, Global System Mobile (GSM) and LTE (Long Term Evolution), 5G New Radio, to name a few.

According to the present disclosure, the at least one controller 110, 210 is configured to receive, from the at least one memory 120, 220, information about the transit zone 300. The at least one controller 110, 210 is further configured to generate, based on the transit zone 300, the travel path 310 for the at least one robotic work tool 100 from the start point 320 to the goal point 330. The generated travel path 310 is configured to differ from previously generated travel paths within the transit zone 300. As understood from e.g. Figure 3, the travel path 310 is generated based on the transit zone 300 such that it is generated to be located within the transit zone 300. Thus, the transit zone 300 limits where the travel path 310 may be located. However, within the transit zone 300, there are no boundaries and the at least one controller 110, 210 may generate the travel path 310 in any way as long as the travel path 310 is located within the transit zone 300 and the travel path 310 differs from previously generated travel paths 310.

The provided robotic work tool system 200 improves the way of transporting at least one robotic work tool 100 between different areas. By allowing the at least one controller 110, 210 to generate travel paths at any place inside the entire transit zone 300, it may be assured that the at least one robotic work tool 100 does not have to repeatedly be transported along the same travel path to reach the goal point. The provided robotic work tool system 200 may assure that the generated travel path 310 for the at least one robotic work tool 100 is not the same as previously generated and used travel paths. Accordingly, the same travel path is not used repeatedly and thereby, it is avoided that marks, or trails, from the at least one robotic work tool 100 are generated. This may be advantageous as trails usually are undesirable as they may destroy the area where the travel path 310 is located. Trails may be perceived as unattractive, but more importantly, they may make the travel path difficult to travel for the robotic work tools 100. Furthermore, as the at least one robotic work tool 100 is limited to the transport within the transit zone 300, an improved way of transporting the at least one robotic work tool 100 between different locations may also be achieved. The transit zone 300 will assure that the at least one robotic work tool 100 does not travel along any travel path, it may only travel along the generated travel paths 310 within the transit zone 300.

As previously described, the at least one controller 110, 210 is configured to control the operation of the at least one robotic work tool 100. Thus, the at least one controller 110, 210 may control the at least one robotic work tool 100 such that the at least one robotic work tool 100 travels according to the generated travel path 310 when the at least one robotic work tool 100 is going to transport from the start point 320 to the goal point 330. The at least one controller 110, 210 may control the at least one motor 155 of the at least one robotic work tool 100 such that the at least one robotic work tool 100 travels in accordance with the direction of the generated travel path 310.

In one embodiment, the robotic work tool system 200 may further comprise at least one input device 130, 230. The input device 130, 230 may be configured to receive transit data associated with the start point 320 and the goal point 330. The at least one controller 110, 210 may further be configured to determine the transit zone 300 based on the transit data received from the at least one input device 130, 230. Accordingly, the at least one input device 130, 230 may be configured to receive data related to the start point 320 and the goal point 330 and based on this data, the at least one controller 110, 210 may determine the corridor in which the at least one robotic work tool 100 is allowed to travel in order to reach the goal point 330 from the start point 320. The information about the determined transit zone 300 may be stored in the at least one memory 120, 220, and the travel path 310 for the robotic work tool 100, from the start point 320 to the goal point 330, may be generated based on the determined transit zone 300.

The at least one input device 130, 230 may be located in the at least one robotic work tool 100, or the at least one input device 130, 230 may be located in a device that is separate from the at least one robotic work tool 100. When the at least one input device 130, 230 is located in another device than in the at least one robotic work tool 100, the separate device is communicatively coupled to the at least one robotic work tool 100 by a wireless communication interface arranged with the robotic work tool 100.

Accordingly, by including at least one input device 130, 230 in the robotic work tool system 200, it may be possible to influence the transit zone 300. It may be possible to determine the transit zone 300 based on additional data received from the at least one input device 130, 230. Thus, a more precise transit zone 300 may be provided as additional data may be considered when determining the transit zone 300.

In some embodiments, the at least one input device 130, 230 may comprise a user interface 600 configured to receive user input from a user during the user's operation and interaction with said user interface 600. The user interface 600 may be configured to receive input related to, and associated with, the transit zone 300. The user interface 600 may be, for example, a touch user interface. The user interface 600 is preferably separated from the robotic work tool 100 as illustrated in Figure 3. However, in some embodiments, the user interface 600 may be located at the at least one robotic work tool 100.

By providing a user interface 600 that may receive transit data, a more precise transit zone 300 may be achieved. For example, in some embodiments, the user, or operator, may input transit data that reflect certain requirements desired by the operator and may thereby the influence the transit zone 300. Thus, a flexible way of providing a more accurate transit zone 300 may be achieved. Furthermore, by providing a user interface 600 a more flexible robotic work tool system 200 may be achieved as the operator may input transit data.

In some embodiments, the at least one controller 110, 210 may further be configured to determine the transit zone 300 by determining virtual boundaries 340 which define a corridor between the start point 320 and the goal point 330. By determining the virtual boundaries 340 of the transit zone 300 in which the at least one robotic work tool 100 is allowed to travel between different locations, it may also be assured that hindrance and obstacles are avoided. For example, if a goal point 330 is difficult to access, e.g. because it may be located behind a flowerbed, the transit zone may assure that the at least one robotic work tool 100 is not allowed to pass over the flowerbed. This may be achieved by determining the transit zone 300 such that it is guided around the flowerbed. Accordingly, the proposed robotic work tool system 200 provides an improved way of transporting at least one robotic work tool 100 between different locations.

In some embodiments, the at least one input device 130, 230 may comprise a recording device. The recording device may register a distance and/or a force with which the robotic work tool 100 is moved along a travel route. The recording device may use odometry to estimate the change in position over time. The recording device may, for example, be an encoder. The encoder may be configured to record the travel route of the at least robotic work tool 100 by tracking rotation of the at least one wheel 150. Pulses noted by the encoder may be transformed into distances per time units. By realizing the recording device by an encoder, a relatively simple but accurate input device is provided.

In some embodiments, the recording device may be configured to record a transit path of the at least one robotic work tool 100 while the at least one robotic work tool 100 is moved from the start point 320 to the goal point 330. In some embodiments, the at least one controller 110,210 may be configured to determine the virtual boundaries 340 by expanding the recorded transit path sideway. The transit zone 300 may then be determined as the area between the recorded transit path and the sideway expanded transit path. In other embodiments, the at least one controller 110,210 may be configured to determine the virtual boundaries 340 by expanding the recorded transit path sideway on both sides of the recorded transit path. Thereafter, the transit zone 300 may be determined as the area between the sideways-expanded transit paths. The transit path may expanded by a distance that is configurable by the at least one input device 600.

Accordingly, by using a recording device to record at least one transit path when the at least one robotic work tool 100 is moved from the start to the goal point and thereafter use this recorded transit path to determine the transit zone 300, it may be easy to assure that the transit zone 300 is located where it is desired. Furthermore, it may be easy to assure that no objects or obstacles are within the way of the at least one robotic work tool 100.

In other embodiments, the recording device may be configured to record transit paths of the at least one robotic work tool 100 while the at least one robotic work tool 100 is moved from the start point 320 to the goal point 330, and from the goal point 330 back to the start point 320. The at least one controller 110,210 may be configured to determine the transit zone 300 to be the area between the two recorded transit paths. Thus, it may be easy to define where the transit zone 300 is located as both boundaries 340 are driven by the at least one robotic work tool 100.

In some embodiments, the at least one controller 110,210 may be configured to randomly generate the travel path 310. Thereby, the risk of the same travel path 310 being generated several times is minimized. In other embodiments, the at least one controller 110, 210 may be configured to systematically generate the travel path 310. In one embodiment, the travel path 310 may generated as a polygonal chain comprising of a connected series of line segments. Each line segment may be generated independently. Each line segment may be generated either randomly or systematically. When they are generated independently, each line segment may be generated such that the generated line segment differ from previously generated corresponding line segments. Furthermore, by generating the travel path 310 as a polygonal chain it may be possible to set different levels of sensitivity for the different line segments. For example, if the first line segment extend over asphalt, that line segment may not be so critical for being used repeatedly, while if the second line segment may extend over grass, that line segment may be really sensitive for repeated use. Thus, the generated travel paths for the first line segment may more often be similar to each other than the generated travel paths for the second line segment.

The travel paths 310 may be pre-generated and assigned to the at least one robot work tool 100 at the moment when it is going to transport between the start point 320 and the goal point 330 in the transit zone 300. Alternatively, the travel paths 310 may be pre-generated and saved within the at least memory 120 within the robotic work tool 100. In case the robotic work tool system 200 comprises multiple robotic work tools 100, each of the at least one robotic work tool 100 may then be assigned different pre-generated travel paths 310.

The previously generated travel paths may, for example, be the travel paths that have been used by the at least one robotic work tool 100 for the last 7 days. Accordingly, within 7 days, the same travel path should not be generated again. Alternatively, the previously generated travel paths 310 may be the 10 previous generated travel paths 310. In this scenario, it is not until the eleventh time that any of the at least one robotic work tools 100 may be transported along the same travel paths 310 within the transit zone 300. In some embodiments, the criteria for previous generated travel paths may be set differently depending on the ground of the transit zone, as also discussed above. For example, a transit zone 300 which comprises grass may be more sensitive to repeatedly used travel paths 310 than a transit zone 300 which comprises of gravel. Thus, the previously generated travel paths 310 may, for example, be the 5 previous generated travel paths 310 for a transit zone 300 of gravel, while it may be the 10 previous generated paths 310 for a transit zone 300 of grass. However, it may be appreciated that the criteria for the previous generated travel paths also may depend on how frequently the transit zone 300 is used.

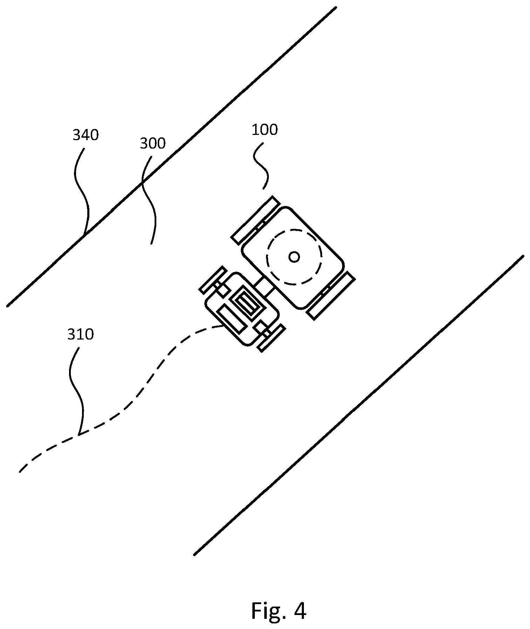

Figure 4 illustrates an example embodiment implementing the proposed robotic work system 200. The robotic work tool system 200 has received information about a transit zone 300. As previously described, the transit zone 300 is the area in which the at least one robotic work tool 100 is allowed to travel from a start point 320 to a goal point 330 along a travel path 310. The two solid lines 340 beside the robotic work tools 100 in Figure 4 represents the boundaries of the transit zone 300. The at least one controller 110, 210 will not generate a travel path 310 that crosses these boundaries 340 or a travel path 310 that is located outside this transit zone 300. The dotted line 310 in front of the robotic work tools 100 in Figure 4 represents the generated travel path 310. As seen in Figure 4, there are two robotic work tools 100 within the transit zone 300. The number of robotic work tools 100 may also be larger. Alternatively, there may only be one robotic work tool 100. According to this example embodiment, the two robotic work tools 100 are located within the transit zone 300 at approximately the same time. However, it may be appreciated that there may be more than the one robotic work tool 100, but that they may not transport within the transit zone 300 at the same time. Furthermore, it may be appreciated that the travel paths 310 within the transit zone 300 may be directed in different directions. When one of the at least one robotic work tool 100 may be transporting from a start point to a goal point, another robotic work tool 100 may transport in the other direction, i.e. from the first robotic work tool's 100 goal point to its start point. However, regardless of the number of robotic work tools 100 and the directions they are travelling, the at least one robotic work tool 100 travels along different travel paths 310 in order to avoid trails from the wheels 150 of the robotic work tools 100.

As has been described above, when the robotic work tool system 200 comprises a plurality of robotic work tools 100, the plurality of robotic work tools 100 may share the same memory 120, 220. By sharing the memory 120, 220, it may be assured that the generated travel paths 310 are configured to differ also from the previously generated travel paths 310 within the transit zone 300 for the other robotic work tools 100. The plurality of robotic work tools 100 thus have access to the same transit zone 300 and the same history of previously generated travel paths 310. Accordingly, the generated travel paths 310 are configured such that they not only differ from the travel paths 310 generated for a specific robotic work tool 100, but for all robotic work tools 100 comprised in the robotic work tool system 200.

In some embodiments, a central controller 210 generates the travel paths 310 for each robotic work tool 100. In other embodiments, the travel paths 310 for each robotic work tool 100 are generated locally in each robotic work tool 100 by the robotic work tools' local controllers 110. In these embodiments, all the robotic work tools 100 within the robotic work tool system 200 share the same history of generated travel paths 310, i.e. have information of all generated travel paths 310 within the transit zone 300 for all the robotic work tools 100, but the generation of the travel paths 310 is decentralized. When a travel path 310 has been generated within a robotic work tool 100, this information is thereafter stored in the shared memory 120, 220, such that subsequent generation of travel paths 310 may also take this travel path 310 into account when a new travel path 310 is generated.

In some embodiments, when the robotic work tool system 200 comprises a plurality of robotic work tools 100, each generated travel path 310 may be generated for a specific robotic work tool 100. In such embodiments, each generated travel path 310 may be generated with regard to the properties of the specific robotic work tool 100. Example of such properties that may be taken into account when generating the travel path may be, for example, the weight of the robotic work tool 100, the wheels of the robotic work tool 100 and the tools of the robotic work tool 100. In other embodiments, a plurality of travel paths 310 are generated and divided among the plurality of robotic work tools 100 without regard to a specific robotic work tool 100.

In some embodiments, the at least one robotic work tool 100 comprises at least one sensor unit. The at least one sensor unit may detect when the at least one robotic work tool 100 crosses the virtual boundaries 340 of the transit zone 300. Accordingly, the at least one sensor may transmit signals to the at least one controller 110, 210 of the robotic work tool system 200, informing it of that the at least one robotic work tool 100 have entered, or exited, the transit zone 300. The at least one controller 110,210 may thus warn, or inform, an operator of the robotic work tool system 200 about that the at least one robotic work tool 100 has crossed the virtual boundaries of the transit zone 300. The operator of the robotic work tool system 200 may, for example, be informed via the user interface 600 or via a sound signal.

The at least one sensor unit may, for example, be a position sensor 170. A robotic work tool 100 comprising a position sensor 170 is illustrated in Figure 1. The position sensor 170 may be configured to detect a position of the robotic work tool 100 when the robotic work tool 100 is moving. The position sensor 170 may comprises a satellite signal receiver 175. The satellite signal receiver 175 may be a Global Navigation Satellite System (GNSS) satellite signal receiver, such as a Global Positioning System (GPS) satellite signal receiver. The position sensor 170 may be connected to the controller 110, 210 for enabling the controller 110, 210 to determine current positions for the robotic work tool 100 using the position sensor 170.

By introducing the above proposed robotic work tool system 200, the previously described disadvantages are eliminated or at least reduced. It may be possible to avoid trails from at least one robotic work tool 100 within a transit zone 300 by guiding the at least one robotic work tool 100 along different travel paths 310 within the transit zone 300 each time the robotic work tool 100 has to transport between the start and goal points. Furthermore, with the proposed robotic work tool system 200, it may be possible to define in which areas a robotic work tool 100 is allowed to travel when transporting between different locations. Accordingly, obstacles and objects on the robotic work tool's 100 way to the goal point 330 may be avoided by defining the transit zone around such obstacles. Thus, a robotic work tool system 200 is provided that improve the way of transporting a robotic work tool between different areas.

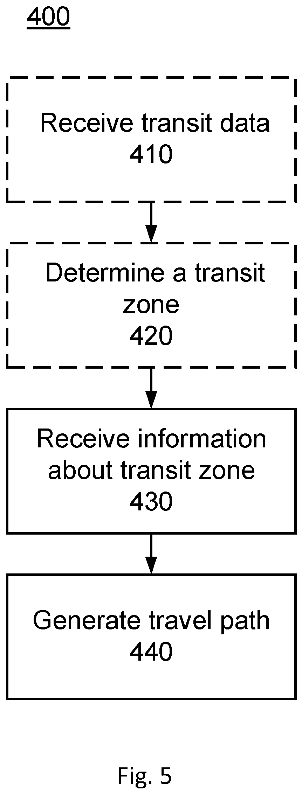

According to a second aspect, there is provided a method 400 performed by the robotic work tool system 200 according to the first aspect for avoiding trails from at least one robotic work tool 100 in a transit zone 300. The transit zone 300 is an area wherein the at least one robotic work tool 100 is allowed to travel from a start point 320 to a goal point 330 along a travel path. The method 400 will be described with reference to Figure 5.

In one embodiment, the robotic work tool system 200 comprises at least one memory 120,220 configured to store information about the transit zone 300 and at least one robotic work tool 100 configured to travel along the travel path 310 within the transit zone 300. The robotic work tool system 200 further comprises at least one controller 110, 210 for controlling operation of the at least one robotic work tool 100. The method 400 comprises step 430 of receiving, from the at least one memory 120, 220, information about, or related to, the transit zone 300. Thereafter, the method 400 comprises step 440 of generating, based on the determined transit zone 300, the travel path 310 for the at least one robotic work tool 100 from the start point 310 to the goal point 320. The generated travel path is configured to differ from previously generated travel paths within the transit zone 300.

In some embodiments, the method 400 may further comprise step 410 of receiving transit data. The transit data may be associated with the start point 320 and the goal point 330. The transit data may be received by at least one input device comprised within the robotic work tool system 200. The method may further comprise step 420 of determining the transit zone 300 based on the transit data.

By introducing the above proposed method 400, it may be possible to avoid trails from the at least one robotic work tool 100 within a transit zone 300. The proposed method 400 may provide an improved way of transporting the robotic work tool 100 between different locations.

Figure 6 shows a schematic view of a computer-readable medium as described in the above. The computer-readable medium 600 is in this embodiment a data disc 600. In one embodiment, the data disc 600 is a magnetic data storage disc. The data disc 600 is configured to carry instructions 610 that when loaded into a controller, such as a processor, execute a method or procedure according to the embodiments disclosed above. The data disc 600 is arranged to be connected to and read by a reading device 620, for loading the instructions into the controller. One such example of a reading device 620 in combination with one (or several) data disc(s) 600 is a hard drive. It should be noted that the computer-readable medium can also be other mediums such as compact discs, digital video discs, flash memories or other memory technologies commonly used. In such an embodiment, the data disc 600 is one type of a tangible computer-readable medium 600.

The instructions 610 may also be downloaded to a computer data reading device 640, such as the controller 110, 210 or other device capable of reading computer coded data on a computer-readable medium, by comprising the instructions 610 in a computer-readable signal 630 which is transmitted via a wireless (or wired) interface (for example via the Internet) to the computer data reading device 640 for loading the instructions 610 into a controller. In such an embodiment, the computer-readable signal 630 is one type of a non-tangible computer-readable medium 600.

The instructions may be stored in a memory (not shown explicitly in Figure 6, but referenced 120, 220 in Figure 2) of the computer data reading device 640.

References to computer program, instructions, code etc. should be understood to encompass software for a programmable processor or firmware such as, for example, the programmable content of a hardware device whether instructions for a processor, or configuration settings for a fixed-function device, gate array or programmable logic device etc. Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Still further, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality.

## Claims

1. A robotic lawnmower system (200) configured to avoid trails from a robotic lawnmower (100) in a transit zone (300), the transit zone (300) being an area connecting a work area with a charging station and in which the robotic lawnmower (100) is allowed to travel from a start point (320) to a goal point (330) along a travel path (310), wherein the robotic lawnmower system (200) comprises:
- at least one memory (120,220) configured to store information about the transit zone (300);
- at least one robotic lawnmower (100) configured to travel along the travel path (310) within the transit zone (300);
- at least one controller (110,210) for controlling operation of the at least one robotic lawnmower (100), the at least one controller (110,210) being configured to:
∘ receive, from the at least one memory (120,220), information about the transit zone (300);
∘ determine the transit zone (300) by determining virtual boundaries (340) which define a corridor between the start point (320) and the goal point (330), wherein said virtual boundaries (340) are determined based on transit data associated with the start point (320) and the goal point (330);
∘ generate, based on the determined transit zone (300), the travel path (310) for the robotic lawnmower (100) from the start point (320) to the goal point (330), wherein the generated travel path (310) is configured to differ from previously generated travel paths within the transit zone (300);
**characterized in that**
the robotic lawnmower system (200) further comprises at least one input device (130,230) configured to receive transit data associated with the start point (320) and the goal point (330); and wherein
the at least one controller (110, 210) is further configured to determine the transit zone (300) based on the transit data received from the at least one input device (130), such that the determination of the virtual boundaries (340) is performed using said transit data; and **in that**
the at least one input device (130,230) comprises a recording device configured to record a transit path of the robotic lawnmower (100) while the robotic lawnmower (100) is moved from the start point (320) to the goal point (330), and further **in that**
the at least one controller (110,210) is further configured to determine the virtual boundaries (340) by expanding the recorded transit path sideways so as to define said corridor, wherein the transit zone (300) is determined as the area between the recorded transit path and the sideway expanded transit path.

2. The robotic lawnmower system (200) according to claim 1, wherein the at least one input device (130,230) comprises a user interface (600) configured to receive user input from a user during the user's operation and interaction with said user interface (600).

3. The robotic lawnmower system (200) according to any of claims 1 or 2, wherein the transit path is expanded by a distance that is configurable by the at least one input device (130,230).

4. The robotic lawnmower system (200) according to claim 1, wherein the recording device is configured to record transit paths of the robotic lawnmower (100) while the robotic lawnmower (100) is moved from the start point (320) to the goal point (330), and from the goal point (330) back to the start point (320), and the at least one controller (110) is configured to determine the transit zone (300) to be the area between the two recorded transit paths.

5. The robotic lawnmower system (200) according to any of the previous claims, wherein the at least one controller (110,210) is configured to randomly generate the travel path (310).

6. The robotic lawnmower system (200) according to any of claims 1 - 4, wherein the at least one controller (110,210) is configured to systematically generate the travel path (310).

7. The robotic lawnmower system (200) according to claim 6, wherein the previously generated travel paths are the travel paths that have been used by the robotic lawnmower (100) for the last 7 days.

8. The robotic lawnmower system (200) according to claim 6, wherein the previously generated travel paths are the 10 previous generated travel paths.

9. The robotic lawnmower system (200) according to any of the previous claims, wherein the distance by which the transit path is expanded is configurable by the at least one input device (130,230).

10. The robotic lawnmower system (200) according to any of the previous claims, further comprising obstacle detection sensors configured to detect and avoid obstacles within the transit zone (300).

11. The robotic lawnmower system (200) according to any of the previous claims, wherein the robotic lawnmower (100) and the controller (110,210) communicate via a wireless communication interface.

12. The robotic lawnmower system (200) according to any of the previous claims, wherein the goal point (330) is a charging station.

13. The robotic lawnmower system (200) according to any of the previous claims, wherein the recording device is configured to record transit paths of the robotic lawnmower (100) while the robotic lawnmower (100) is moved from the start point (320) to the goal point (330), and from the goal point (330) back to the start point (320), and the at least one controller (110) is configured to determine the transit zone (300) to be the area between the two recorded transit paths.

14. A method performed by a robotic lawnmower system (200) for avoiding trails from a robotic lawnmower (100) in a transit zone (300), the transit zone (300) being an area connecting a work area with a charging station and in which the robotic lawnmower (100) is allowed to travel from a start point (320) to a goal point (330) along a travel path (310), wherein the robotic lawnmower system (200) comprises at least one memory (120,220) configured to store information about the transit zone (300), at least one robotic lawnmower (100) configured to travel along the travel path (310) within the transit zone (300), and at least one controller (110,210) for controlling operation of the robotic lawnmower (100), the method comprising:
- receiving, from the at least one memory (120,220), information about the transit zone (300);
- determining, by the at least one controller (110,210), the transit zone (300) by determining virtual boundaries (340) which define a corridor between the start point (320) and the goal point (330), wherein said virtual boundaries (340) are determined based on transit data associated with the start point (320) and the goal point (330);
- generating, by the at least one controller (110,210) based on the determined transit zone (300), the travel path (310) for the robotic lawnmower (100) from the start point (320) to the goal point (330), wherein the generated travel path (310) is configured to differ from previously generated travel paths within the transit zone (300);
- receiving, by at least one input device (130,230), transit data associated with the start point (320) and the goal point (330);
- recording, by the at least one input device (130,230), a transit path of the robotic lawnmower (100) while the robotic lawnmower (100) is moved from the start point (320) to the goal point (330);
- determining, by the at least one controller (110, 210), the transit zone (300) based on the transit data received from the at least one input device (130), such that the determination of the virtual boundaries (340) is performed using said transit data; and further
- determining, by the at least one controller (110,210), the virtual boundaries (340) by expanding the recorded transit path sideways so as to define said corridor, wherein the transit zone (300) is determined as the area between the recorded transit path and the sideway expanded transit path.

15. A computer program comprising instructions which, when the computer program is executed by a controller (110,210) of a robotic lawnmower system (200), cause the controller (110,210) to carry out the method according to claim 14.

## Patentansprüche

1. Roboterrasenmähersystem (200), das konfiguriert ist, um Spuren von einem Roboterrasenmäher (100) in einer Transitzone (300) zu vermeiden, wobei die Transitzone (300) ein Bereich ist, der einen Arbeitsbereich mit einer Ladestation verbindet und in dem der Roboterrasenmäher (100) von einem Startpunkt (320) zu einem Zielpunkt (330) entlang eines Fahrpfads (310) fahren darf, wobei das Roboterrasenmähersystem (200) umfasst:
- mindestens einen Speicher (120,220), der konfiguriert ist, um Informationen über die Transitzone (300) zu speichern;
- mindestens einen Roboterrasenmäher (100), der konfiguriert ist, um entlang des Fahrpfads (310) innerhalb der Transitzone (300) zu fahren;
- mindestens eine Steuereinrichtung (110,210) zum Steuern eines Betriebs des mindestens einen Roboterrasenmähers (100), wobei die mindestens eine Steuereinrichtung (110,210) konfiguriert ist zum:
∘ Empfangen, von dem mindestens einen Speicher (120,220), von Informationen über die Transitzone (300);
Bestimmen der Transitzone (300) durch das Bestimmen virtueller Grenzen (340), die einen Korridor zwischen dem Startpunkt (320) und dem Zielpunkt (330) definieren, wobei die virtuellen Grenzen (340) basierend auf Transitdaten bestimmt werden, die mit dem Startpunkt (320) und dem Zielpunkt (330) verknüpft sind;
∘ Erzeugen, basierend auf der bestimmten Transitzone (300), des Fahrpfads (310) für den Roboterrasenmäher (100) von dem Startpunkt (320) zu dem Zielpunkt (330), wobei der erzeugte Fahrpfad (310) konfiguriert ist, um sich von zuvor erzeugten Fahrpfaden innerhalb der Transitzone (300) zu unterscheiden;
**dadurch gekennzeichnet, dass**
das Roboterrasenmähersystem (200) ferner mindestens eine Eingabevorrichtung (130,230) umfasst, die konfiguriert ist, um Transitdaten zu empfangen, die mit dem Startpunkt (320) und dem Zielpunkt (330) verknüpft sind; und wobei
die mindestens eine Steuereinrichtung (110, 210) ferner konfiguriert ist, um die Transitzone (300) derart basierend auf den Transitdaten zu bestimmen, die von der mindestens einen Eingabevorrichtung (130) empfangen werden, dass die Bestimmung der virtuellen Grenzen (340) unter Verwendung der Transitdaten durchgeführt wird; und **dass**
die mindestens eine Eingabevorrichtung (130,230) eine Aufzeichnungsvorrichtung umfasst, die konfiguriert ist, um einen Transitpfad des Roboterrasenmähers (100) aufzuzeichnen, während der Roboterrasenmäher (100) von dem Startpunkt (320) zu dem Zielpunkt (330) bewegt wird, und ferner, **dass**
die mindestens eine Steuereinrichtung (110,210) konfiguriert ist, um die virtuellen Grenzen (340) durch ein seitliches Erweitern des aufgezeichneten Transitpfads zu bestimmen, um den Korridor zu definieren, wobei die Transitzone (300) als der Bereich zwischen dem aufgezeichneten Transitpfad und dem seitlich erweiterten Transitpfad bestimmt wird.

2. Roboterrasenmähersystem (200) nach Anspruch 1, wobei die mindestens eine Eingabevorrichtung (130,230) eine Benutzerschnittstelle (600) umfasst, die konfiguriert ist, um eine Benutzereingabe von einem Benutzer während des Betriebs und der Interaktion des Benutzers mit der Benutzerschnittstelle (600) zu empfangen.

3. Roboterrasenmähersystem (200) nach einem der Ansprüche 1 oder 2, wobei der Transitpfad um eine Distanz erweitert wird, die durch die mindestens eine Eingabevorrichtung (130,230) konfigurierbar ist.

4. Roboterrasenmähersystem (200) nach Anspruch 1, wobei die Aufzeichnungsvorrichtung konfiguriert ist, um Transitpfade des Roboterrasenmähers (100) aufzuzeichnen, während der Roboterrasenmäher (100) von dem Startpunkt (320) zu dem Zielpunkt (330) und von dem Zielpunkt (330) zurück zu dem Startpunkt (320) bewegt wird, und die mindestens eine Steuereinrichtung (110) konfiguriert ist, um die Transitzone (300) als den Bereich zwischen den zwei aufgezeichneten Transitpfaden zu bestimmen.

5. Roboterrasenmähersystem (200) nach einem der vorstehenden Ansprüche, wobei die mindestens eine Steuereinrichtung (110,210) konfiguriert ist, um den Fahrpfad (310) zufällig zu erzeugen.

6. Roboterrasenmähersystem (200) nach einem der Ansprüche 1 bis 4, wobei die mindestens eine Steuereinrichtung (110,210) konfiguriert ist, um den Fahrpfad (310) systematisch zu erzeugen.

7. Roboterrasenmähersystem (200) nach Anspruch 6, wobei die zuvor erzeugten Fahrpfade die Fahrpfade sind, die durch den Roboterrasenmäher (100) in den letzten 7 Tagen verwendet wurden.

8. Roboterrasenmähersystem (200) nach Anspruch 6, wobei die zuvor erzeugten Fahrpfade die 10 zuvor erzeugten Fahrpfade sind.

9. Roboterrasenmähersystem (200) nach einem der vorstehenden Ansprüche, wobei die Distanz, um den der Transitpfad erweitert wird, durch die mindestens eine Eingabevorrichtung (130,230) konfigurierbar ist.

10. Roboterrasenmähersystem (200) nach einem der vorstehenden Ansprüche, ferner umfassend Hinderniserkennungssensoren, die konfiguriert sind, um Hindernisse innerhalb der Transitzone (300) zu erkennen und zu vermeiden.

11. Roboterrasenmähersystem (200) nach einem der vorstehenden Ansprüche, wobei der Roboterrasenmäher (100) und die Steuereinrichtung (110,210) über eine drahtlose Kommunikationsschnittstelle kommunizieren.

12. Roboterrasenmähersystem (200) nach einem der vorstehenden Ansprüche, wobei der Zielpunkt (330) eine Ladestation ist.

13. Roboterrasenmähersystem (200) nach einem der vorstehenden Ansprüche, wobei die Aufzeichnungsvorrichtung konfiguriert ist, um Transitpfade des Roboterrasenmähers (100) aufzuzeichnen, während der Roboterrasenmäher (100) von dem Startpunkt (320) zu dem Zielpunkt (330) und von dem Zielpunkt (330) zurück zu dem Startpunkt (320) bewegt wird, und die mindestens eine Steuereinrichtung (110) konfiguriert ist, um die Transitzone (300) als den Bereich zwischen den zwei aufgezeichneten Transitpfaden zu bestimmen.

14. Verfahren, das von einem Roboterrasenmähersystem (200) durchgeführt wird, zum Vermeiden von Spuren von einem Roboterrasenmäher (100) in einer Transitzone (300), wobei die Transitzone (300) ein Bereich ist, der einen Arbeitsbereich mit einer Ladestation verbindet und in dem der Roboterrasenmäher (100) von einem Startpunkt (320) zu einem Zielpunkt (330) entlang eines Fahrpfads (310) fahren darf, wobei das Roboterrasenmähersystem (200) mindestens einen Speicher (120,220), der konfiguriert ist, um Informationen über die Transitzone (300) zu speichern, mindestens einen Roboterrasenmäher (100), der konfiguriert ist, um entlang des Fahrpfads (310) innerhalb der Transitzone (300) zu fahren, und mindestens eine Steuereinrichtung (110,210) zum Steuern des Betriebs des Roboterrasenmähers (100) umfasst, das Verfahren umfassend:
- Empfangen, von dem mindestens einen Speicher (120,220), von Informationen über die Transitzone (300);
- Bestimmen, durch die mindestens eine Steuereinrichtung (110,210), der Transitzone (300) durch das Bestimmen virtueller Grenzen (340), die einen Korridor zwischen dem Startpunkt (320) und dem Zielpunkt (330) definieren, wobei die virtuellen Grenzen (340) basierend auf Transitdaten bestimmt werden, die mit dem Startpunkt (320) und dem Zielpunkt (330) verknüpft sind;
- Erzeugen, durch die mindestens eine Steuereinrichtung (110,210), basierend auf der bestimmten Transitzone (300), des Fahrpfads (310) für den Roboterrasenmäher (100) von dem Startpunkt (320) zu dem Zielpunkt (330), wobei der erzeugte Fahrpfad (310) konfiguriert ist, um sich von zuvor erzeugten Fahrpfaden innerhalb der Transitzone (300) zu unterscheiden;
- Empfangen, durch mindestens eine Eingabevorrichtung (130,230), von Transitdaten, die mit dem Startpunkt (320) und dem Zielpunkt (330) verknüpft sind;
- Aufzeichnen, durch die mindestens eine Eingabevorrichtung (130,230), eines Transitpfads des Roboterrasenmähers (100), während der Roboterrasenmäher (100) von dem Startpunkt (320) zu dem Zielpunkt (330) bewegt wird;
- derartiges Bestimmen, durch die mindestens eine Steuereinrichtung (110, 210), der Transitzone (300) basierend auf den Transitdaten, die von der mindestens einen Eingabevorrichtung (130) empfangen werden, dass die Bestimmung der virtuellen Grenzen (340) unter Verwendung der Transitdaten durchgeführt wird; und ferner
- Bestimmen, durch die mindestens eine Steuereinrichtung (110,210), der virtuellen Grenzen (340) durch das seitliche Erweitern des aufgezeichneten Transitpfads, um den Korridor zu definieren, wobei die Transitzone (300) als der Bereich zwischen dem aufgezeichneten Transitpfad und dem seitlich erweiterten Transitpfad bestimmt wird.

15. Computerprogramm, umfassend Anweisungen, die, wenn das Computerprogramm durch eine Steuereinrichtung (110,210) eines Roboterrasenmähersystems (200) ausgeführt wird, die Steuereinrichtung (110,210) veranlassen, das Verfahren nach Anspruch 14 vorzunehmen.

## Revendications

1. Système de tondeuse à gazon robotique (200) configuré pour éviter les traces provenant d'une tondeuse à gazon robotique (100) dans une zone de transit (300), la zone de transit (300) étant une aire reliant une aire de travail à une station de recharge et dans laquelle la tondeuse à gazon robotique (100) est autorisée à se déplacer d'un point de départ (320) à un point d'arrivée (330) le long d'une trajectoire de déplacement (310), dans lequel le système de tondeuse à gazon robotique (200) comprend :
- au moins une mémoire (120, 220) configurée pour stocker des informations concernant la zone de transit (300) ;
- au moins une tondeuse à gazon robotique (100) configurée pour se déplacer le long de la trajectoire de déplacement (310) au sein de la zone de transit (300) ;
- au moins une unité de commande (110, 210) permettant de commander le fonctionnement de l'au moins une tondeuse à gazon robotique (100), l'au moins une unité de commande (110, 210) étant configurée pour :
∘ recevoir, à partir de l'au moins une mémoire (120, 220), des informations concernant la zone de transit (300) ;
∘ déterminer la zone de transit (300) en déterminant des limites virtuelles (340) qui définissent un couloir entre le point de départ (320) et le point d'arrivée (330), dans lequel lesdites limites virtuelles (340) sont déterminées en fonction de données de transit associées au point de départ (320) et au point d'arrivée (330) ;
∘ générer, en fonction de la zone de transit (300) déterminée, la trajectoire de déplacement (310) pour la tondeuse à gazon robotique (100) allant du point de départ (320) au point d'arrivée (330), dans lequel la trajectoire de déplacement (310) générée est configurée pour différer de trajectoires de déplacement précédemment générées au sein de la zone de transit (300) ;
**caractérisé en ce que**
le système de tondeuse à gazon robotique (200) comprend en outre au moins un dispositif d'entrée (130, 230) configuré pour recevoir des données de transit associées au point de départ (320) et au point d'arrivée (330) ; et dans lequel
l'au moins une unité de commande (110, 210) est configurée en outre pour déterminer la zone de transit (300) en fonction des données de transit reçues en provenance de l'au moins un dispositif d'entrée (130), de telle sorte que la détermination des limites virtuelles (340) est mise en œuvre à l'aide desdites données de transit ; et **en ce que**
l'au moins un dispositif d'entrée (130, 230) comprend un dispositif d'enregistrement configuré pour enregistrer une trajectoire de transit de la tondeuse à gazon robotique (100) alors que la tondeuse à gazon robotique (100) est déplacée du point de départ (320) au point d'arrivée (330), et en outre **en ce que**
l'au moins une unité de commande (110, 210) est configurée en outre pour déterminer les limites virtuelles (340) en étendant la trajectoire de transit enregistrée latéralement de façon à définir ledit couloir, dans lequel la zone de transit (300) est déterminée en tant qu'aire entre la trajectoire de transit enregistrée et la trajectoire de transit étendue latéralement.

2. Système de tondeuse à gazon robotique (200) selon la revendication 1, dans lequel l'au moins un dispositif d'entrée (130, 230) comprend une interface utilisateur (600) configurée pour recevoir une entrée utilisateur en provenance d'un utilisateur pendant le fonctionnement et l'interaction de l'utilisateur avec ladite interface utilisateur (600).

3. Système de tondeuse à gazon robotique (200) selon l'une quelconque des revendications 1 ou 2, dans lequel la trajectoire de transit est étendue d'une distance qui est configurable par l'au moins un dispositif d'entrée (130, 230).

4. Système de tondeuse à gazon robotique (200) selon la revendication 1, dans lequel le dispositif d'enregistrement est configuré pour enregistrer des trajectoires de transit de la tondeuse à gazon robotique (100) alors que la tondeuse à gazon robotique (100) est déplacée du point de départ (320) au point d'arrivée (330), et revient du point d'arrivée (330) au point de départ (320), et l'au moins une unité de commande (110) est configurée pour déterminer la zone de transit (300) pour qu'elle soit l'aire entre les deux trajectoires de transit enregistrées.

5. Système de tondeuse à gazon robotique (200) selon l'une quelconque des revendications précédentes, dans lequel l'au moins une unité de commande (110, 210) est configurée pour générer de manière aléatoire la trajectoire de déplacement (310).

6. Système de tondeuse à gazon robotique (200) selon l'une quelconque des revendications 1 à 4, dans lequel l'au moins une unité de commande (110, 210) est configurée pour générer systématiquement la trajectoire de déplacement (310).

7. Système de tondeuse à gazon robotique (200) selon la revendication 6, dans lequel les trajectoires de déplacement précédemment générées sont les trajectoires de déplacement qui ont été utilisées par la tondeuse à gazon robotique (100) pendant les 7 derniers jours.

8. Système de tondeuse à gazon robotique (200) selon la revendication 6, dans lequel les trajectoires de déplacement précédemment générées sont les 10 trajectoires de déplacement générées précédentes.

9. Système de tondeuse à gazon robotique (200) selon l'une quelconque des revendications précédentes, dans lequel la distance de laquelle la trajectoire de transit est étendue est configurable par l'au moins un dispositif d'entrée (130, 230).

10. Système de tondeuse à gazon robotique (200) selon l'une quelconque des revendications précédentes, comprenant en outre des capteurs de détection d'obstacles configurés pour détecter et éviter des obstacles au sein de la zone de transit (300).

11. Système de tondeuse à gazon robotique (200) selon l'une quelconque des revendications précédentes, dans lequel la tondeuse à gazon robotique (100) et l'unité de commande (110, 210) communiquent par l'intermédiaire d'une interface de communication sans fil.

12. Système de tondeuse à gazon robotique (200) selon l'une quelconque des revendications précédentes, dans lequel le point d'arrivée (330) est une station de recharge.

13. Système de tondeuse à gazon robotique (200) selon l'une quelconque des revendications précédentes, dans lequel le dispositif d'enregistrement est configuré pour enregistrer des trajectoires de transit de la tondeuse à gazon robotique (100) alors que la tondeuse à gazon robotique (100) est déplacée du point de départ (320) au point d'arrivée (330), et revient du point d'arrivée (330) au point de départ (320), et l'au moins une unité de commande (110) est configurée pour déterminer la zone de transit (300) pour qu'elle soit l'aire entre les deux trajectoires de transit enregistrées.

14. Procédé mis en œuvre par un système de tondeuse à gazon robotique (200) permettant d'éviter des traces provenant d'une tondeuse à gazon robotique (100) dans une zone de transit (300), la zone de transit (300) étant une aire reliant une aire de travail à une station de recharge et dans laquelle la tondeuse à gazon robotique (100) est autorisée à se déplacer d'un point de départ (320) à un point d'arrivée (330) le long d'une trajectoire de déplacement (310), dans lequel le système de tondeuse à gazon robotique (200) comprend au moins une mémoire (120, 220) configurée pour stocker des informations concernant la zone de transit (300), au moins une tondeuse à gazon robotique (100) configurée pour se déplacer le long de la trajectoire de déplacement (310) au sein de la zone de transit (300), et au moins une unité de commande (110, 210) permettant de commander le fonctionnement de la tondeuse à gazon robotique (100), le procédé comprenant :
- la réception, en provenance de l'au moins une mémoire (120, 220), d'informations concernant la zone de transit (300) ;
- la détermination, par l'au moins une unité de commande (110, 210), de la zone de transit (300) en déterminant des limites virtuelles (340) qui définissent un couloir entre le point de départ (320) et le point d'arrivée (330), dans lequel lesdites limites virtuelles (340) sont déterminées en fonction de données de transit associées au point de départ (320) et au point d'arrivée (330) ;
- la génération, par l'au moins une unité de commande (110, 210) en fonction de la zone de transit (300) déterminée, de la trajectoire de déplacement (310) pour la tondeuse à gazon robotique (100) allant du point de départ (320) au point d'arrivée (330), dans lequel la trajectoire de déplacement (310) générée est configurée pour différer de trajectoires de déplacement précédemment générées au sein de la zone de transit (300) ;
- la réception, par au moins un dispositif d'entrée (130, 230), de données de transit associées au point de départ (320) et au point d'arrivée (330) ;
- l'enregistrement, par l'au moins un dispositif d'entrée (130, 230), d'une trajectoire de transit de la tondeuse à gazon robotique (100) alors que la tondeuse à gazon robotique (100) est déplacée du point de départ (320) au point d'arrivée (330) ;
- la détermination, par l'au moins une unité de commande (110, 210), de la zone de transit (300) en fonction des données de transit reçues en provenance de l'au moins un dispositif d'entrée (130), de telle sorte que la détermination des limites virtuelles (340) est mise en œuvre à l'aide desdites données de transit ; et en outre
- la détermination, par l'au moins une unité de commande (110, 210), des limites virtuelles (340) en étendant la trajectoire de transit enregistrée latéralement de façon à définir ledit couloir, dans lequel la zone de transit (300) est déterminée en tant qu'aire entre la trajectoire de transit enregistrée et la trajectoire de transit étendue latéralement.

15. Programme informatique comprenant des instructions qui, lorsque le programme informatique est exécuté par une unité de commande (110, 210) d'un système de tondeuse à gazon robotique (200), amènent l'unité de commande (110, 210) à effectuer le procédé selon la revendication 14.
